# EUROPÄISCHE PATENTSCHRIFT

(11) **EP 2 730 782 B1**
(45) Veröffentlichungstag und Bekanntmachung des Hinweises auf die Patenterteilung: **01.01.2020**
(21) Anmeldenummer: 13181774.4
(22) Anmeldetag: 27.08.2013
(51) Int. Cl.: F03G 3/08, H02K 7/02, F04D 19/04, F03G 3/00

(54) **Vorrichtung zur kinetischen Energiespeicherung**
Kinetic energy storage device
Dispositif de stockage d'énergie cinétique

(30) Priorität: 08.11.2012 DE 102012110691
(43) Veröffentlichungstag der Anmeldung: 14.05.2014
(73) Patentinhaber: Pfeiffer Vacuum GmbH, 35614 Aßlar (DE)
(72) Erfinder: Bremer, Wolfgang, 35444 Biebertal (DE); Conrad, Armin, 35745 Herborn (DE)
(74) Vertreter: Knefel, Cordula

(56) Entgegenhaltungen:
- WO-A1-2010/122333
- WO-A1-2013/148527
- AU-A1- 2006 203 265
- JP-A- S62 243 987
- US-A- 5 462 402
- US-A1- 2009 134 705
- US-B1- 6 175 172

## Beschreibung

Die Erfindung betrifft eine Vorrichtung zur kinetischen Energiespeicherung.

Aus dem Stand der Technik (DE 10 2010 023 536 A1) ist eine Vorrichtung zur intelligenten Netzleistungsregulierung durch kinetische Energiespeicherung bekannt.

Diese Vorrichtung weist einen Schwungrad-Energiespeicher mit einem Elektromotor auf. Nachteil dieser Vorrichtung ist, dass der Wirkungsgrad dieser zum Stand der Technik gehörenden Vorrichtung zur kinetischen Energiespeicherung einen relativ niedrigen Wirkungsgrad aufweist, da diese Vorrichtung unter Atmosphärendruck arbeitet.

Weiterhin ist aus dem Stand der Technik (DE 20 2011 108 033 U1) eine Vorrichtung mit Energierückgewinnungssystem bekannt, bei dem zur Zwischenspeicherung einer anfallenden Bewegungsenergie zumindest ein Energierückgewinnungssystem vorgesehen ist, welches Bewegungsenergie in elektrische Energie umwandelt, und bei dem das zumindest eine Energierückgewinnungssystem aus einer nach dem Reluktanzprinzip gesteuerten Elektromaschine mit einem als Schwungmassenkörper ausgebildeten Rotor und einem fest mit einem Gehäuse verbundenen Stator gebildet ist.

Diese zum Stand der Technik gehörende Vorrichtung weist zwar einen vakuumierten Raum auf, um den Einfluss der Luftreibung zu minimieren. In dem vakuumierten Raum ist der Schwungmassenspeicher angeordnet. Zur Erzeugung des Vakuums ist jedoch eine externe Vakuumpumpe vorgesehen. Diese Vorrichtung benötigt hierzu, wie aus der Praxis bekannt, eine Hochvakuumpumpe und eine Vorvakuumpumpe, um das erforderliche Vakuum in dem Gehäuse mit dem Schwungmassenspeicher zu erzeugen. Denkbar sind auch Anordnungen, die nur mit einer Vorvakuumpumpe auskommen, beispielsweise mit einer zweistufigen Drehschieberpumpe.

Zum nachveröffentlichten Stand der Technik (WO 2013/148527 A1), der lediglich zur Prüfung der Neuheit heranzuziehen ist, gehört eine Vorrichtung zur kinetischen Energiespeicherung, bei der zur Zwischenspeicherung einer Bewegungsenergie zumindest ein Energierückgewinnungssystem vorgesehen ist, welches Bewegungsenergie in elektrische Energie umwandelt. Das Energierückgewinnungssystem weist wenigstens einen Schwungmassenkörper auf. Diese zum Stand der Technik gehörende Vorrichtung kann hinsichtlich des Wirkungsgrades weiter verbessert werden.

Weiterhin gehört zum Stand der Technik (US 5,462,402 A) eine Vorrichtung zur kinetischen Energiespeicherung, die hinsichtlich der Effizienz verbessert werden kann.

Zum Stand der Technik (US 2009/0134705 A1) gehört darüber hinaus eine Vorrichtung zur Energiespeicherung, die ebenfalls hinsichtlich ihrer Effizienz weiter verbessert werden kann.

Außerdem gehört zum Stand der Technik (AU 2006/203265 A1) eine Vorrichtung, die ein Schwungrad aufweist, mit der ebenfalls eine Energiespeicherung möglich ist, die ebenfalls hinsichtlich der Effizienz deutlich verbessert werden kann.

Das der Erfindung zugrunde liegende technische Problem besteht darin, eine Vorrichtung zur kinetischen Energiespeicherung anzugeben, die zum einen einen hohen Wirkungsgrad aufweist, indem der Einfluss der Luftreibung in der Vorrichtung minimiert wird, und die zum anderen auf eine vorgeschaltete Hochvakuumpumpe verzichten kann, oder bei der das Vakuum ohne zusätzliche Hochvakuumpumpstufe verbessert wird.

Dieses technische Problem wird durch eine Vorrichtung mit den Merkmalen gemäß Anspruch 1 gelöst.

Die erfindungsgemäße Vorrichtung zur kinetischen Energiespeicherung mit wenigstens einer in einem Motor- und/ oder einem Generatorbetrieb betreibbaren Elektromaschine, wobei zur Zwischenspeicherung einer anfallenden Bewegungsenergie zumindest ein Energierückgewinnungssystem vorgesehen ist, welches Bewegungsenergie in elektrische Energie umwandelt, wobei das Energierückgewinnungssystem wenigstens einen Schwungmassenkörper, der als Rotor ausgebildet ist und einen in einem Gehäuse angeordneten Stator aufweist, wobei der Rotor und/oder der Stator als wenigstens eine Vakuumpumpstufe ausgebildet sind, dass der Rotor der Vorrichtung aus der Rotorwelle, der Nabe und dem Schwungmassenkörper besteht, dass die Rotorwelle in Lagern gelagert ist, zeichnet sich dadurch aus,
- dass wenigstens eine Gehäuseinnenfläche pumpaktive Flächen aufweist, die parallel zu einer Rotationsachse als Holweck-Pumpstufe oder als Cross-Channel-Pumpstufe ausgebildet sind,
- oder dass der Schwungmassenkörper pumpaktive Flächen aufweist, die parallel zu einer Rotationsachse als Gewindepumpstufe oder als Cross-Channel-Pumpstufe ausgebildet sind,
- und dass die pumpaktiven Flächen wenigstens zwischen der Außenseite des Schwungmassenkörpers und der Gehäuseinnenfläche ausgebildet sind,
- und dass der Schwungmassenkörper aus Metall und/oder kohlenstofffaserverstärktem Kunststoff gebildet ist,
- und dass der Schwungmassenkörper in axialer Richtung der Rotorwelle (3) zwischen den Lagern angeordnet ist.

Die Kombination von einem schnell drehenden Schwungmassenkörper mit der geeigneten Geometrie ermöglicht eine Pumpwirkung im molekularen Bereich hin zu einem Druck, der ideal für den Betrieb des Schwungmassenkörpers ist und zu einer erheblichen Verringerung der Gasreibung führt.

Die erfindungsgemäße Vorrichtung kann zum Beispiel bei unterbrechungsfreien Stromversorgungssystemen eingesetzt werden oder auch als kinetischer Energiespeicher für Automobile und andere Anwendungsgebiete. Als Anwendungsgebiet kommen auch Windenergieanlagen oder Photovoltaikanlagen in Frage, um Phasen zu überbrücken, in denen diese Anlagen keinen Strom erzeugen.

Die erfindungsgemäße Vorrichtung weist dadurch, dass das Energierückgewinnungssystem selbst als Vakuumpumpe aufgebaut ist, den Vorteil auf, dass in dem Gehäuse, in dem sich der Schwungmassenkörper bewegt, von dem Schwungmassenkörper selbst das Vakuum erzeugt wird. Es besteht die Möglichkeit, dass die Vorrichtung gegen Atmosphärendruck ausstößt. Sofern erforderlich, besteht jedoch auch die Möglichkeit, eine preiswerte Vorpumpe vorzusehen.

Durch diesen erfindungsgemäßen Aufbau wird in dem Gehäuse, in dem sich der Schwungmassenkörper bewegt, ein Vakuum erzeugt, wodurch der Wirkungsgrad des Energiespeichers erhöht wird. Zum anderen ist es nicht erforderlich, eine teure Hochvakuumpumpe, beispielsweise eine Turbomolekularpumpe vorzuschalten. Im besten Fall kann ganz auf eine zusätzliche, also vorgeschaltete Pumpe verzichtet werden. Falls erforderlich, kann, wie ausgeführt, die ohnehin auch bei einer Turbovakuumpumpe vorgesehene Vorpumpe der erfindungsgemäßen Vorrichtung vorgeschaltet sein.

Gemäß einer bevorzugten Ausführungsform der Erfindung sind der Rotor und/oder der Stator als Holweck-Pumpstufe und/oder Siegbahn-Pumpstufe und/oder als Cross-Channel-Pumpstufe und/oder Gewindepumpstufe ausgebildet.

Diese erfindungsgemäße Ausbildung der Pumpstufen hat den Vorteil, dass der Schwungmassenspeicher mit dem Stator zusammen derart ausgebildet sein kann, dass parallel zu einer Rotationsachse des Schwungmassenspeichers pumpaktive Flächen ausgebildet sind in der Art wenigstens einer Holweck-Pumpstufe oder einer Gewindepumpstufe, und dass senkrecht zur Rotationsachse pumpaktive Flächen in der Art einer Siegbahn-Pumpstufe ausgebildet sind. Zusätzlich kann wenigstens eine Cross-Channel-Pumpstufe vorgesehen sein.

Durch die Kombination der unterschiedlichen Pumpstufen ist es möglich, sämtliche pumprelevanten Oberflächen innerhalb der Vorrichtung pumpaktiv zu nutzen.

Gemäß einer weiteren vorteilhaften Ausführungsform ist der Rotor als Holweck-Hülse oder als Holweck-Zylinder ausgebildet. Die pumpaktiven Kanäle können in dem Rotor oder in den korrespondierenden Wänden des Stators angeordnet sein.

Eine weitere vorteilhafte Ausführungsform der Erfindung sieht vor, dass der Schwungmassenkörper an einer Nabe befestigt ist und dass die Nabe an einer Rotorwelle angeordnet ist und dass an der Nabe und/oder an der Rotorwelle zusätzlich wenigstens eine Siegbahn-, Holweck-, Gewinde- und/oder Cross-Channel-Pumpstufe angeordnet ist. Hierdurch ist es möglich, auch die Nabe und/oder den Rotor als pumpaktive Fläche zu nutzen.

Gemäß der Erfindung ist vorgesehen, dass der Schwungmassenkörper oder das Gehäuse pumpaktive Flächen aufweist, die parallel zur Rotationsachse als Holweck-Pumpstufen oder Gewindepumpstufen oder Cross-Channel-Pumpstufen ausgebildet sind. Zusätzlich können senkrecht zur Rotationsachse die pumpaktiven Flächen als Siegbahn-Pumpstufen ausgebildet sein. Hierdurch wird der Wirkungsgrad der erfindungsgemäßen Vorrichtung deutlich erhöht.

Gemäß einer weiteren vorteilhaften Ausführungsform der Erfindung ist der Schwungmassenkörper als rotierende Hülse oder als rotierender Hohlzylinder ausgebildet. Die Hülse oder der Zylinder ist an der Nabe angeordnet. Diese Ausführungsform weist den Vorteil auf, dass sie aus einfachen und damit kostengünstig herzustellenden Bauteilen ausgebaut ist.

Eine weitere Ausführungsform der Erfindung sieht vor, dass die Nabe als eine sich zum Schwungmassenkörper hin im Querschnitt erweiternde Nabe ausgebildet ist. Durch diese Ausführungsform kann die Masse des Schwungmassenkörpers bestehend aus Nabe und Zylinder deutlich erhöht werden, wodurch der Wirkungsgrad sich ebenfalls erhöht.

Eine weitere vorteilhafte Ausführungsform der Erfindung sieht vor, dass der Schwungmassenkörper als ein rotierender Vollzylinder ausgebildet ist, der unmittelbar am Rotor befestigt ist. Durch diese Ausführungsform weist der Schwungmassenkörper eine sehr große Masse auf, wodurch der Wirkungsgrad deutlich erhöht wird.

Die Erfindung sieht vor, dass der Schwungmassenkörper aus Metall und/oder kohlenstofffaserverstärktem Kunststoff gebildet ist. Bei der Ausführung aus Metall weist der Schwungmassenkörper eine sehr große Masse auf, wodurch die Energiespeicherung optimiert wird. Die Ausbildung aus kohlenstofffaserverstärktem Kunststoff weist den Vorteil auf, dass der Schwungmassenkörper einfach und preisgünstig hergestellt werden kann.

Die erfindungsgemäße Vorrichtung kann einen oder mehrere Auslässe aufweisen.

Als Lager für die Rotorwelle können Wälzlager und/oder aktive und/oder passive Magnetlager vorgesehen sein.

Weitere Merkmale und Vorteile der Erfindung ergeben sich anhand der zugehörigen Zeichnung, in der mehrere Ausführungsbeispiele einer erfindungsgemäßen Vorrichtung nur beispielhaft dargestellt sind. In der Zeichnung zeigen:
- Fig. 1: eine erfindungsgemäße Vorrichtung im Längsschnitt;
- Fig. 2: ein geändertes Ausführungsbeispiel;
- Fig. 3: ein geändertes Ausführungsbeispiel;
- Fig. 4: eine Draufsicht auf eine Siegbahn-Pumpstufe;
- Fig. 5: ein geändertes Ausführungsbeispiel einer erfindungsgemäßen Vorrichtung;
- Fig. 6: ein geändertes Ausführungsbeispiel;
- Fig. 7: ein geändertes Ausführungsbeispiel;
- Fig. 8: ein geändertes Ausführungsbeispiel.

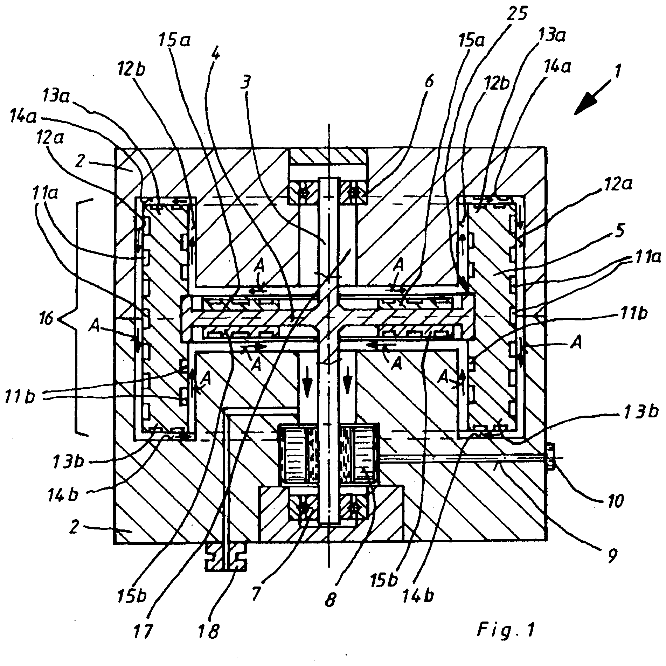

Fig. 1 zeigt eine Vorrichtung 1 zur kinetischen Energiespeicherung mit einem Gehäuse 2, einer Rotorwelle 3, an der eine Nabe 4 befestigt ist. An der Nabe 4 ist ein Schwungmassenkörper 5 in Form eines Hohlzylinders angeordnet. Die Rotorwelle 3 ist in Lagern 6, 7 drehbar gelagert. Eine Elektromaschine 8, die in einem Motor- oder einem Generatorbetrieb betreibbar ist, weist eine elektrische Durchführung 9 zu einem Elektroanschluss 10 auf.

Der Schwungmassenkörper 5 weist Kanäle 11a auf, die zusammen mit einer Innenwand 12a des Gehäuses 2 eine Gewindepumpstufe 16 bilden. Die Gewindepumpstufe 16 wirkt mit den Innenwänden 12a zusammen.

Die Darstellung in den Figuren ist lediglich beispielhaft ausgeführt. Bei einer Holweck-Pumpstufe sind die pumpaktiven Flächen in dem Gehäuse 2 angeordnet und die Rotoroberfläche ist glatt ausgebildet. Bei einer Gewindepumpstufe 16 sind die pumpaktiven Flächen in der Rotoroberfläche angeordnet und die Gehäuseinnenflächen sind glatt ausgebildet. Üblicherweise sind bei einer Siegbahn-Pumpstufe die pumpaktiven Flächen im Gehäuse angeordnet und der Rotor ist glatt ausgebildet. In den folgenden Figuren ist jedoch bei den Siegbahn-Pumpstufen die Darstellung derart gewählt, dass die pumpaktiven Flächen in dem Rotor angeordnet sind und die Gehäuseinnenwand glatt ausgestaltet ist.

Kanäle 11b wirken mit einer Innenwand 12b zusammen und bilden eine Gewindepumpstufe.

Siegbahn-Pumpstufen 13a, 13b wirken mit Innenwänden 14a, 14b zusammen. Hier ist natürlich auch eine nicht dargestellte Ausführungsform möglich, die in den Statorflächen 14a, 14b Nuten entsprechend einer Siegbahn-Pumpstufe besitzt und mit korrespondierenden Flächen 13a, 13b des Rotors zusammenwirkt, die glatt ausgebildet sind.

Zusätzlich sind auf der Nabe 4 weitere Siegbahn-Pumpstufen 15a, 15b vorgesehen. Wird die Rotorwelle 3 mit der Nabe 4 und dem Schwungmassenkörper 5 in Bewegung versetzt, evakuieren die Gewindepumpstufen (11a, 12a, 11b, 12b) und die Siegbahn-Pumpstufen 13a, 13b, 15a, 15b einen Hohlraum 17 des Gehäuses 2 über einen Auslass 18. Die Richtung der Gasmoleküle, die durch die Pumpstufen befördert werden, ist mit Pfeilen A dargestellt. Der Schwungmassenkörper 5 kann sich damit im evakuierten Hohlraum 17 frei von Luftreibung bewegen. Ein Rotor 25 der Vorrichtung 1 besteht aus der Rotorwelle 3, der Nabe 4 und dem Schwungmassenkörper 5.

Die Gasmoleküle werden von den Siegbahn-Pumpstufen 15a in Bezug auf die Rotorwelle 3 radial nach außen befördert. Eine weitere Beförderung erfolgt durch die Gewindepumpstufe, die mit der Innenwand 12b zusammenwirkt. Anschließend werden die Gasmoleküle von der Siegbahn-Pumpstufe 13a zu den Kanälen 11a der weiteren Gewindepumpstufe gefördert. Eine weitere Beförderung der Gasmoleküle erfolgt von der Siegbahn-Pumpstufe 13b in Richtung der Gewindepumpstufe 11b und von dort weiter in Richtung der Siegbahn-Pumpstufe 15b, bevor die Gasmoleküle dem Auslass 18 zugeführt werden.

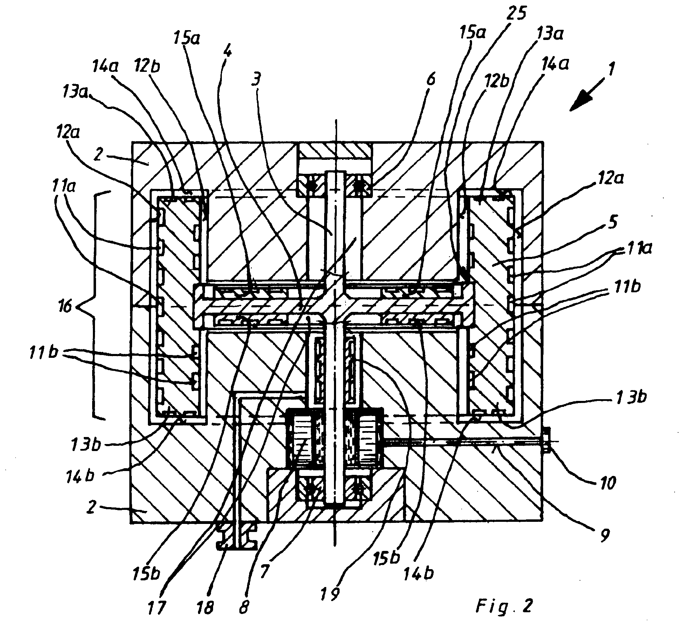

Fig. 2 zeigt eine Vorrichtung 1, die im Wesentlichen dem Aufbau der Vorrichtung gemäß Fig. 1 entspricht. Mit Fig. 1 übereinstimmende Bauteile weisen die gleichen Bezugszahlen auf, sind jedoch nicht mehr näher beschrieben, sondern nur die wesentlichen Änderungen.

Gemäß Fig. 2 ist auf der Rotorwelle 3 eine zusätzliche Gewindepumpstufe 19 angeordnet, durch die sich die Pumpleistung der Vorrichtung 1 erhöht. Möglich ist auch an dieser Stelle, eine Holweck-Pumpstufe mit Kanälen im Stator anzuordnen oder eine Cross-Channel-Pumpstufe mit gegenläufigen Kanälen im Stator und Rotor.

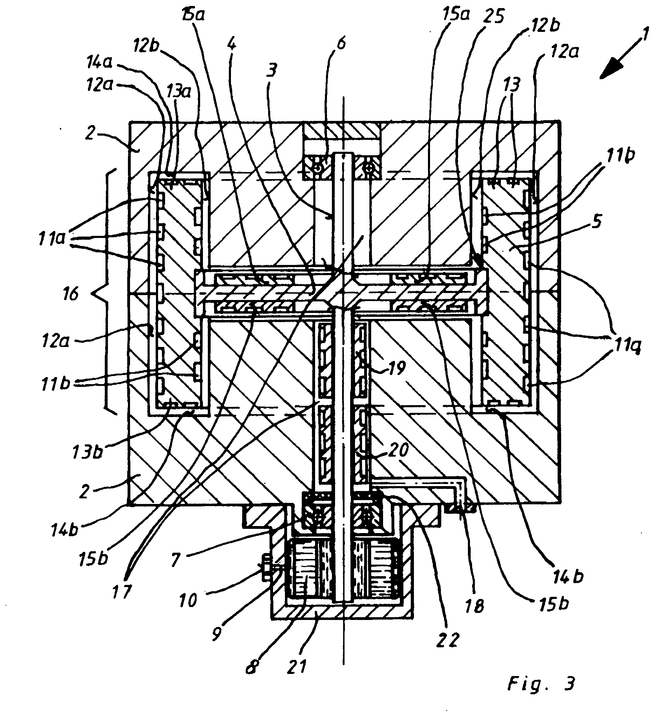

Fig. 3 zeigt wieder eine Vorrichtung 1, bei der mit Fig. 1 übereinstimmende Bauteile nicht näher beschrieben sind, sondern nur die wesentlichen Änderungen.

Gemäß Fig. 3 ist auf der Rotorwelle 3 eine weitere Pumpstufe 20, die als Cross-Channel-Pumpstufe ausgebildet ist, angeordnet. Bei der Cross-Channel-Pumpstufe 20 sind pumpaktive Flächen auf dem Rotor und auf der Gehäuseinnenwand angeordnet. Die pumpaktiven Flächen auf der Gehäuseinnenwand sind wegen der besseren Übersicht nicht dargestellt.

Bei der Vorrichtung 1 gemäß Fig. 3 ist die Elektromaschine 8 außerhalb des Gehäuses 2 in einem eigenständigen Gehäusebauteil 21 angeordnet. Die Rotorwelle 3 ist aus dem Gehäuse 2 durch eine mechanische Durchführung 22, die vorteilhaft eine Dichtung aufweist, geführt. Die Elektromaschine 8 liegt damit außerhalb des Gehäuses 2.

Die Austrittsöffnung 18 ist gegenüber den Ausführungsformen der Fig. 1 und 2 in Rotorwellennähe verlegt worden.

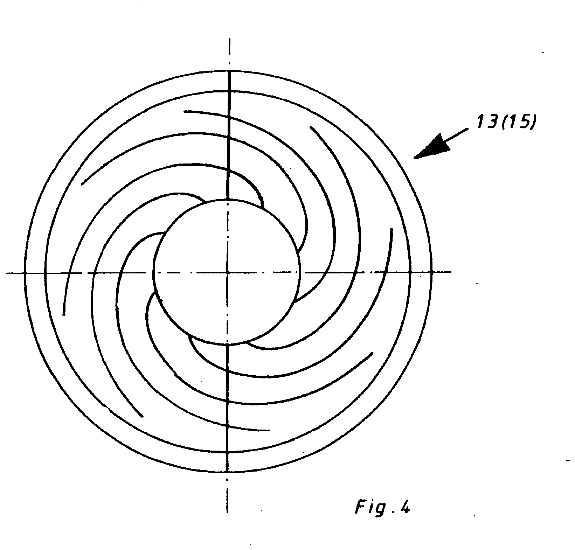

Fig. 4 zeigt eine Siegbahn-Pumpstufe 13. Derartige Siegbahn-Pumpstufen 13, 15 sind gemäß den Fig. 1 bis 3 mit pumpaktiven Flächen, die senkrecht zu der Rotationsachse des Rotors ausgerichtet sind, ausgebildet.

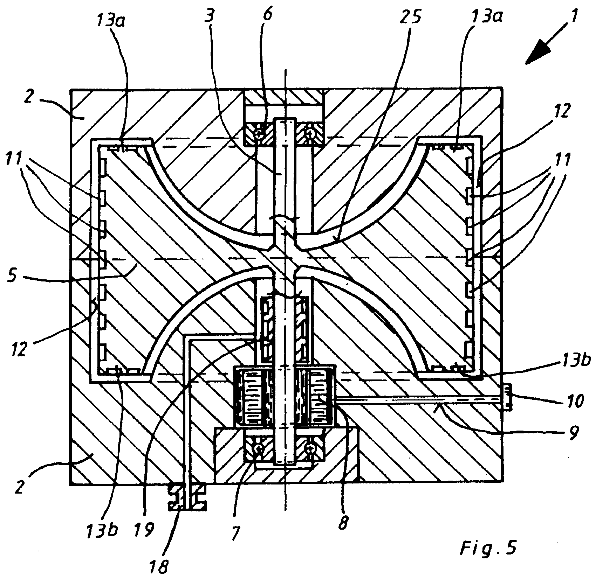

Fig. 5 zeigt eine Vorrichtung 1 mit dem Gehäuse 2, der Rotorwelle 3, den Lagern 6 und 7 sowie der Elektromaschine 8.

Die elektrische Durchführung 9 mit dem Elektroanschluss 10 wie auch der Auslass 18 sind analog zu der Ausführungsform gemäß Fig. 1 vorgesehen.

Der Schwungmassenkörper 5 ist unmittelbar an der Rotorwelle 3 befestigt. Der Schwungmassenkörper 5 weist darüber hinaus einen sich von der Rotorwelle 3 radial nach außen hin erweiternden Querschnitt auf. In dem Spalt zwischen dem Rotor und dem Stator, der sich von der Rotorwelle 3 zu der Siegbahn-Pumpstufe 13a erstreckt, können durch Einbringen von Nuten in den Rotor und/oder in den korrespondierenden Statorflächen noch weitere Pumpstufen integriert werden. Der Schwungmassenkörper 5 weist wiederum Kanäle 11 auf, die mit einer Innenwand 12 des Gehäuses 2 eine Gewindepumpstufe bilden. Darüber hinaus sind Siegbahn-Pumpstufen 13a, 13b vorgesehen. Auf der Rotorwelle 3 ist zusätzlich die Gewindepumpstufe 19 angeordnet. Diese Ausführungsform weist den Vorteil auf, dass der Schwungmassenkörper 5 eine sehr große Masse aufweist.

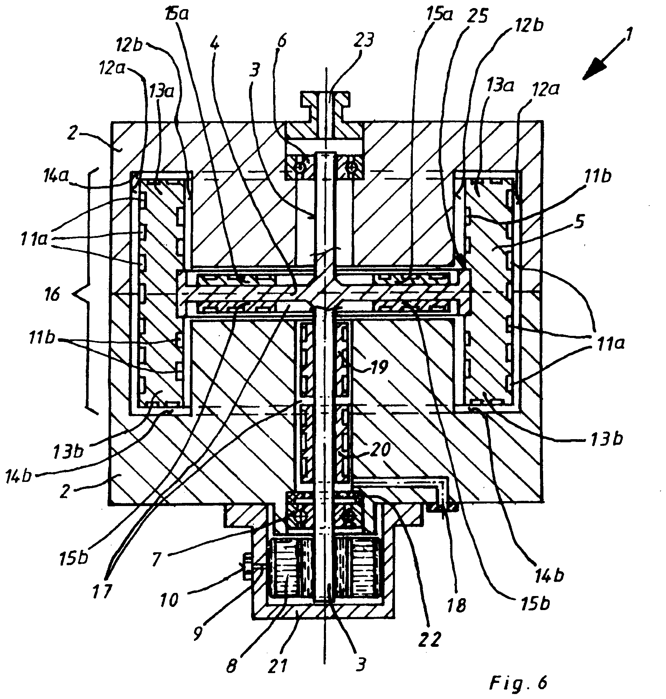

Fig. 6 zeigt eine Vorrichtung 1. Mit den Fig. 1, 2, 3, 5 übereinstimmende Bauteile sind nicht näher beschrieben, sondern nur die wesentlichen Änderungen.

Gemäß Fig. 6 weist die Vorrichtung 1 zusätzlich zu dem Auslass 18 einen weiteren Auslass 23 auf. Die Gasförderrichtung beginnt in der Mitte der Gewindepumpstufe/Holweck-Pumpstufe 16 und fördert das Gas zum Teil zu der Siegbahn-Pumpstufe 13a und zum Teil zu der Siegbahn-Pumpstufe 13b und anschließend in Richtung der Auslässe 18, 23.

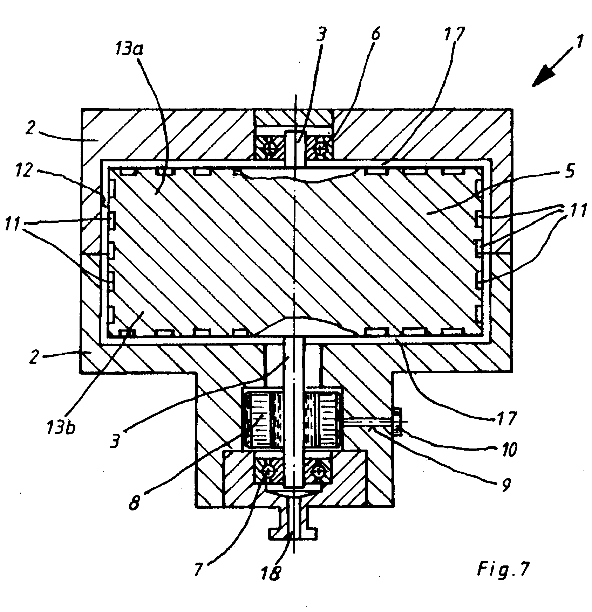

Fig. 7 zeigt eine Vorrichtung 1 mit einem Gehäuse 2. In dem Gehäuse 2 ist ein Hohlraum 17 angeordnet. Die Vorrichtung weist eine Rotorwelle 3 auf, die in Lagern 6, 7 gelagert ist.

Zusätzlich ist eine Elektromaschine 8 vorgesehen mit einer elektrischen Durchführung 9 zu einem Elektroanschluss 10. Der Schwungmassenkörper 5 ist als Vollzylinder ausgebildet. Hierdurch weist der Vollzylinder eine sehr große Masse auf. Der Vollzylinder weist an seiner Außenseite Kanäle 11 auf, die eine Gewindepumpstufe bilden.

Über einen Auslass 18 erzeugt der Schwungmassenkörper 5 in dem Hohlraum 17 ein Vakuum.

Der Auslass 18 kann auch an anderer Stelle angeordnet sein. Es ist auch möglich, die Elektromaschine 8 und das Lager 7 außerhalb des Gehäuses 2 anzuordnen. Darüber hinaus sind Siegbahn-Pumpstufen 13a, 13b auf dem Schwungmassenkörper 5 angeordnet.

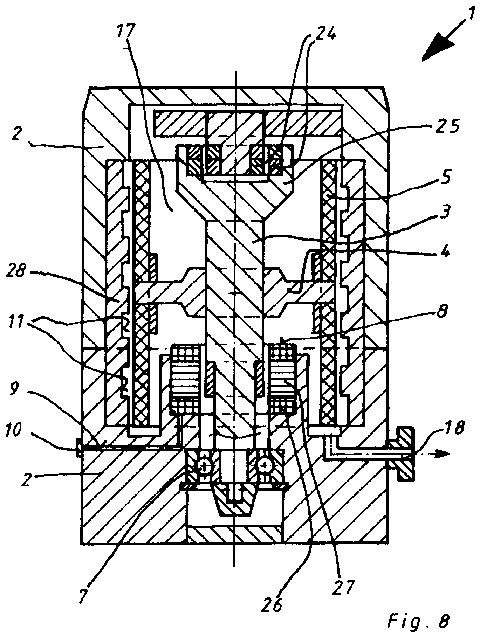

Fig. 8 zeigt ein weiteres Ausführungsbeispiel für eine Vorrichtung 1 mit einem Gehäuse 2, einer in dem Gehäuse 2 rotierend gelagerten Rotorwelle 3, an der eine Nabe 4 angeordnet ist. Die Rotorwelle ist in einem Magnetlager 24 und einem Kugellager 7 gelagert. Darüber hinaus sind eine Elektromaschine 8 und ein Auslass 18 vorgesehen. Innerhalb der Vorrichtung 1 ist ein Rotor 25 vorgesehen, der aus Rotorwelle 3, Nabe 4 und Hülse 5 gebildet ist.

Die Lageranordnung aus Magnetlager 24 und Kugellager 7 weist den Vorteil auf, dass ein schmiermittelfreies Lager in dem Hohlraum 17 eingesetzt wird. Auf der Welle 3 ist ein Permanentmagnet 26 vorgesehen, der mit einer bestromten Antriebsspule 27 zusammenwirkt. Hierdurch kann der Rotor 25 in eine ausreichend schnelle Drehzahl versetzt werden. Ein Stator 28 weist auf seiner dem Rotor 25 zugewandten Oberfläche ein oder eine Mehrzahl schraubenlinienartiger Kanäle 11 auf. Dieses Ausführungsbeispiel ist derart gestaltet, dass nicht der Schwungmassenkörper 5 die Kanäle trägt, sondern der Stator 28. Somit ist hier eine Holweck-Pumpstufe dargestellt.

### Bezugszahlen

- 1: Vorrichtung
- 2: Gehäuse
- 3: Rotorwelle
- 4: Nabe
- 5: Schwungmassenkörper
- 6: Lager
- 7: Lager
- 8: Elektromaschine
- 9: elektrische Durchführung
- 10: Elektroanschluss
- 11: Kanäle
- 11a: Kanäle
- 11b: Kanäle
- 12: Innenwände
- 12a: Innenwände
- 12b: Innenwände
- 13a: Siegbahn-Pumpstufe
- 13b: Siegbahn-Pumpstufe
- 14a: Innenwände
- 14b: Innenwände
- 15a: Siegbahn-Pumpstufe
- 15b: Siegbahn-Pumpstufe
- 16: Holweck-Pumpstufe/Gewindepumpstufe
- 17: Hohlraum
- 18: Auslass
- 19: Holweck-Pumpstufe/Gewindepumpstufe
- 20: Cross-Channel-Pumpstufe
- 21: Gehäusebauteil
- 22: mechanische Durchführung und Dichtung

- 23: Auslass
- 24: Magnetlager
- 25: Rotor
- 26: Permanentmagnet
- 27: Antriebsspule
- 28: Stator
- A: Pfeile

## Patentansprüche

1. Vorrichtung zur kinetischen Energiespeicherung mit wenigstens einer in einem Motor- und/oder einem Generatorbetrieb betreibbaren Elektromaschine, wobei zur Zwischenspeicherung einer anfallenden Bewegungsenergie zumindest ein Energierückgewinnungssystem vorgesehen ist, welches Bewegungsenergie in elektrische Energie umwandelt, wobei das Energierückgewinnungssystem wenigstens einen Schwungmassenkörper, der als Rotor ausgebildet ist, und einen in einem Gehäuse angeordneten Stator aufweist, wobei der Rotor (25) und/oder der Stator (28) als wenigstens eine Vakuumpumpstufe (13a, 13b, 15a, 15b, 16, 19, 20) ausgebildet sind, dass der Rotor (25) der Vorrichtung (1) aus der Rotorwelle (3), der Nabe (4) und dem Schwungmassenkörper (5) besteht, dass die Rotorwelle (3) in Lagern (6, 7; 7, 24) gelagert ist,
**dadurch gekennzeichnet,**
- **dass** wenigstens eine Gehäuseinnenfläche pumpaktive Flächen aufweist, die parallel zu einer Rotationsachse als Holweck-Pumpstufe oder als Cross-Channel-Pumpstufe ausgebildet sind,
- oder dass der Schwungmassenkörper (5) pumpaktive Flächen aufweist, die parallel zu einer Rotationsachse als Gewindepumpstufe oder als Cross-Channel-Pumpstufe ausgebildet sind,
- und **dass** die pumpaktiven Flächen wenigstens zwischen der Außenseite des Schwungmassenkörpers (5) und der Gehäuseinnenfläche ausgebildet sind,
- und **dass** der Schwungmassenkörper (5) aus Metall und/oder kohlenstofffaserverstärktem Kunststoff gebildet ist,
- und **dass** der Schwungmassenkörper in axialer Richtung der Rotorwelle (3) zwischen den Lagern (6, 7; 7, 24) angeordnet ist.

2. Vorrichtung nach Anspruch 1, **dadurch gekennzeichnet, dass** der Rotor (25) und/oder der Stator (28) als Holweck-Pumpstufe (16, 19) und/oder Siegbahn-Pumpstufe (13a, 13b, 15a, 15b) und/oder als Cross-Channel-Pumpstufe (20) und/oder als Gewindepumpstufe (16, 19) ausgebildet sind.

3. Vorrichtung nach Anspruch 1 oder 2, **dadurch gekennzeichnet, dass** der Schwungmassenkörper (5) als Holweck-Hülse oder als Holweck-Zylinder oder als Hülse oder Zylinder einer Gewindepumpstufe ausgebildet ist.

4. Vorrichtung nach einem der vorhergehenden Ansprüche, **dadurch gekennzeichnet, dass** der Schwungmassenkörper (5) an der Nabe (4) befestigt ist, dass die Nabe (4) an der Rotorwelle (3) angeordnet ist, und dass an der Nabe (4) und/oder der Rotorwelle (3) zusätzlich wenigstens eine Siegbahn- (15a, 15b), Holweck- (19), Gewinde- und/oder Cross-Channel-Pumpstufe (20) angeordnet ist.

5. Vorrichtung nach einem der Ansprüche 1 oder 2, **dadurch gekennzeichnet, dass** der Schwungmassenkörper (5) als rotierende Hülse oder als rotierender Zylinder ausgebildet ist, die oder der an der Nabe (4) angeordnet ist.

6. Vorrichtung nach einem der vorhergehenden Ansprüche, **dadurch gekennzeichnet, dass** der Schwungmassenkörper (5) einen sich radial nach außen erweiternden Querschnitt aufweist.

7. Vorrichtung nach Anspruch 1, **dadurch gekennzeichnet, dass** der Schwungmassenkörper (5) als ein rotierender Vollzylinder ausgebildet ist, der unmittelbar an der Rotorwelle (3) befestigt ist.

8. Vorrichtung nach einem der Ansprüche 5 oder 7, **dadurch gekennzeichnet, dass** die rotierende Hülse (5) oder der Vollzylinder (5) oder der Stator (28) die einer Gewindepumpstufe oder einer Holweck-Pumpstufe (16, 19) entsprechenden Kanäle (11a, 11b) aufweist.

9. Vorrichtung nach einem der vorhergehenden Ansprüche, **dadurch gekennzeichnet, dass** eine Gehäuseinnenfläche pumpaktive Flächen aufweist, die senkrecht zu einer Rotationsachse als Siegbahn-Pumpstufe ausgebildet sind.

10. Vorrichtung nach einem der Ansprüche 1 bis 8, **dadurch gekennzeichnet, dass** der Schwungmassenkörper pumpaktive Flächen aufweist, die senkrecht zu einer Rotationsachse analog einer Siegbahn-Pumpstufe ausgebildet sind.

## Claims

1. A device for kinetic energy storage with at least one electric machine operable in a motor mode and/or a generator mode, wherein for the intermediate storage of motional energy arising there is provided at least one energy recovery system, which converts motional energy into electrical energy, wherein the energy recovery system comprises at least one flywheel mass body, which is formed as a rotor, and a stator which is arranged in a housing, wherein the rotor (25) and/or the stator (28) are configured as at least one vacuum pump stage (13a, 13b, 15a, 15b, 16, 19, 20), in that the rotor (25) of the device (1) consists of the rotor shaft (3), the hub (4) and the flywheel mass body (5), in that the rotor shaft (3) is mounted in bearings (6, 7; 7, 24),
**characterised in that**
- at least one housing interior face comprises pump-active surfaces, which are formed parallel to a rotation axis as a Holweck-pump stage or as a cross-channel-pump stage, or **in that**
- the flywheel mass body (5) has pump-active surfaces, which are formed parallel to a rotation axis as a screw-pump stage or as a cross-channel pump stage, and **in that**
- the pump-active surfaces are formed at least between the exterior of the flywheel mass body (5) and the housing interior surface, and **in that**
- the flywheel mass body (5) is made of metal and/or carbon fibre-reinforced synthetic material, and **in that**
- the flywheel mass body is arranged in the axial direction of the rotor shaft (3) between the bearings (6, 7; 7, 24).

2. A device according to claim 1, **characterised in that** the rotor (25) and/or the stator (28) are configured as a Holweck-pump stage (16, 19) and/or a Siegbahn-pump stage (13a, 13b, 15a, 15b) and/or a cross-channel-pump stage (20) and/or a screw pump stage (16,19).

3. A device according to claim 1 or 2, **characterised in that** the flywheel mass body (5) is configured as a Holweck sleeve or as a Holweck cylinder or as a sleeve or a cylinder of a screw pump stage.

4. A device according to any one of the preceding claims, **characterised in that** the flywheel mass body (5) is fixed to the hub (4), **in that** the hub (4) is arranged on the rotor shaft (3), and **in that** on the hub (4) and/or the rotor shaft (3) there is additionally arranged a Siegbahn - (15a, 15b), a Holweck - (19), a screw - and/or a cross-channel-pump-stage (20).

5. A device according to claim 1 or 2, **characterised in that** the flywheel mass body (5) is formed as a rotating sleeve or as a rotating cylinder, and is arranged on the hub (4).

6. A device according to any one of the preceding claims, **characterised in that** the flywheel mass body (5) has a radially outwardly widening cross-section.

7. A device according to claim 1, **characterised in that** the flywheel mass body (5) is formed as rotating solid cylinder, which is directly connected to the rotor shaft (3).

8. A device according to claim 5 or 7, **characterised in that** the rotating sleeve (5) or the solid cylinder (5) on the stator (28) has the channels (11a, 11b) corresponding to a screw-pump stage or to a Holweck-pump stage (16, 19).

9. A device according to any one of the preceding claims, **characterised in that** a housing interior face has pump-active surfaces which are formed perpendicular to a rotation axis as a Siegbahn-pump stage.

10. A device according to any one of claims 1 to 8, **characterised in that** the flywheel mass body has pump-active surfaces which are formed perpendicular to a rotation axis analogously to a Siegbahn-pump stage.

## Revendications

1. Dispositif de stockage cinétique d'énergie doté d'au moins une machine électrique exploitable dans un fonctionnement de moteur et/ou de générateur, dans lequel au moins un système de récupération d'énergie est prévu pour le stockage intermédiaire d'une énergie cinétique engendrée, lequel convertit l'énergie cinétique en énergie électrique, dans lequel le système de récupération d'énergie comporte au moins un corps de masse oscillante, lequel est réalisé comme rotor, et un stator agencé dans un boîtier, dans lequel le rotor (25) et/ou le stator (28) sont réalisés comme au moins un étage de pompe à vide (13a, 13b, 15a, 15b, 16, 19, 20), en ce que le rotor (25) du dispositif (1) est constitué par l'arbre de rotor (3), le moyeu (4) et le corps de masse oscillante (5), en ce que l'arbre de rotor (3) est logé dans des paliers (6, 7 ; 7, 24),
**caractérisé en ce que**
- au moins une surface intérieure de boîtier comporte des surfaces actives de pompage, lesquelles sont réalisées parallèlement à un axe de rotation comme étages de pompe de Holweck ou comme étages de pompe à canaux croisés,
- ou **en ce que** le corps de masse oscillante (5) comporte des surfaces actives de pompage, lesquelles sont réalisées parallèlement à un axe de rotation comme étages de pompe à vis ou comme étages de pompe à canaux croisés,
- et **en ce que** les surfaces actives de pompage sont réalisées au moins entre la face extérieure du corps de masse oscillante (5) et la surface intérieure du boîtier,
- et **en ce que** le corps de masse oscillante (5) est fait de métal et/ou de plastique renforcé par des fibres de carbone,
- et **en ce que** le corps de masse oscillante est agencé entre les paliers (6, 7 ; 7, 24) dans la direction axiale de l'arbre de rotor (3).

2. Dispositif selon la revendication 1, **caractérisé en ce que** le rotor (25) et/ou le stator (28) sont réalisés comme étages de pompe de Holweck (16, 19) et/ou comme étages de pompe de Siegbahn (13a, 13b, 15a, 15b) et/ou comme étages de pompe à canaux croisés (20) et/ou comme étages de pompe à vis (16, 19).

3. Dispositif selon la revendication 1 ou 2, **caractérisé en ce que** le corps de masse oscillante (5) est réalisé comme un manchon de Holweck ou comme un cylindre de Holweck ou comme manchon ou cylindre d'un étage de pompe à vis.

4. Dispositif selon l'une des revendications précédentes, **caractérisé en ce que** le corps de masse oscillante (5) est fixé au moyeu (4), **en ce que** le moyeu (4) est agencé sur l'arbre de rotor (3), et **en ce qu'**en outre au moins un étage de pompe de Siegbahn (15a, 15b), de Holweck (19), à vis et/ou à canaux croisés (20) est agencé sur le moyeu (4) et/ou sur l'arbre de rotor (3).

5. Dispositif selon l'une des revendications 1 et 2, **caractérisé en ce que** le corps de masse oscillante (5) est réalisé comme manchon rotatif ou comme cylindre rotatif, qui est agencé sur le moyeu (4).

6. Dispositif selon l'une des revendications précédentes, **caractérisé en ce que** le corps de masse oscillante (5) possède une section transversale s'élargissant radialement vers l'extérieur.

7. Dispositif selon la revendication 1, **caractérisé en ce que** le corps de masse oscillante (5) est réalisé comme un cylindre plein rotatif, lequel est fixé directement à l'arbre de rotor (3).

8. Dispositif selon l'une des revendications 5 ou 7, **caractérisé en ce que** le manchon rotatif (5) ou le cylindre plein (5) ou le stator (28) comporte les canaux (lla, 11b) correspondant à un étage de pompe à vis ou à un étage de pompe de Holweck (16, 19).

9. Dispositif selon l'une des revendications précédentes, **caractérisé en ce qu'**une surface intérieure du boîtier comporte des surfaces actives de pompage, lesquelles sont réalisées perpendiculairement à un axe de rotation comme étage de pompe de Siegbahn.

10. Dispositif selon l'une des revendications 1 à 8, **caractérisé en ce que** le corps de masse oscillante comporte des surfaces actives de pompage, lesquelles sont réalisées perpendiculairement à un axe de rotation de manière analogue à un étage de pompe de Siegbahn.
